# EUROPÄISCHE PATENTSCHRIFT

(11) **EP 3 514 640 B1**
(45) Veröffentlichungstag und Bekanntmachung des Hinweises auf die Patenterteilung: **17.05.2023**
(21) Anmeldenummer: 19020011.3
(22) Anmeldetag: 11.01.2019
(51) Int. Cl.: G05B 19/418

(54) **VORRICHTUNG UND VERFAHREN ZUR BEREITSTELLUNG VON MASCHINENDATEN**
METHOD AND DEVICE FOR PROVIDING MACHINE DATA
DISPOSITIF ET PROCÉDÉ DE FOURNITURE DES DONNÉES DE MACHINE

(30) Priorität: 18.01.2018 DE 102018000361; 25.01.2018 DE 202018000385 U
(43) Veröffentlichungstag der Anmeldung: 24.07.2019
(73) Patentinhaber: Gebr. Saacke GmbH & Co.KG, 75181 Pforzheim (DE)
(72) Erfinder: Axtmann, Michael, 75181 Pforzheim (DE)
(74) Vertreter: Leitner, Waldemar

(56) Entgegenhaltungen:
- DE-A1- 10 360 637
- GB-A- 2 208 553
- N N: "Wireless Connect add wireless to any cnc", , 9. November 2017 (2017-11-09), Seiten 1-2, XP055595007, Gefunden im Internet: URL:https://sfa-moxa.s3.amazonaws.com/Wire less%20Connect%20-%20Brochure.pdf?AWSAcces sKeyId=AKIAIZI7LXTO4VLH5PZQ&Expires=155990 9281&Signature=f1RjNoCmtfxVY53RYBnu0iUaCwI = [gefunden am 2019-06-07]
- JEFF TYSON: "How Firewalls Work", INTERNET CITATION, 2. April 2003 (2003-04-02), XP002419032, Gefunden im Internet: URL:http://web.archive.org/web/20030402210 309/http://computer.howstuffworks.com/fire wall.htm [gefunden am 2007-02-08]

## Beschreibung

Die Erfindung betrifft eine Maschine enthaltend eine Vorrichtung zur Bereitstellung von Maschinendaten, wobei die Maschine eine Maschinensteuerung aufweist, in der die Maschinendaten gespeichert sind, wobei die Maschinensteuerung über eine Datenverbindung mit der Vorrichtung verbunden ist, wobei die Vorrichtung die von der Maschine bereitgestellten Maschinendaten an mindestens ein maschinenexternes Peripheriegerät weiterleitet, eine Maschinendaten-Schnittstelle aufweist, die über die Datenverbindung mit der Maschine verbunden ist und mindestens einen Mikrocomputer besitzt, der mit der Maschinendaten-Schnittstelle verbunden ist, wobei die Vorrichtung mindestens eine Kommunikationseinrichtung besitzt, welche über eine weitere Datenverbindung mit dem mindestens einen Mikrocomputer verbunden ist mindestens eine Schnittstelle aufweist, über welche die Vorrichtung mit mindestens einem Peripheriegerät verbindbar ist.

Im Zuge der Digitalisierung von technischen und/oder organisatorischen Verfahrensabläufen besteht verbreitet das Bedürfnis, die Maschinendaten einer Produktions- oder Arbeitsmaschine zentral zu erfassen und zu bewerten. Derartige Maschinendaten können z. B. den Betriebszustand der Maschine, Informationen zu dem von ihr durchgeführten Prozess, zum Energieverbrauch, instandhaltungsrelevante Daten sowie sonstige für die Arbeitsweise der entsprechenden Maschine und/oder des mit ihr herzustellenden Produkts relevante Kenngrößen enthalten. Die von einer Maschinensteuerung der Herstellungs- oder Arbeitsmaschine gelieferten Maschinendaten werden bisher über ein Netzwerkkabel über ein Unternehmensnetzwerk, z. B. ein Intranet, oder sogar über das Internet zu einem maschinenexternen Peripheriegerät, z. B. einem zentralen Server des Unternehmens geleitet und mittels entsprechender Software-Applikationen weiterverarbeitet, um z. B. Kenngrößen für die Maschineneffektivität zu gewinnen, Instandhaltungsmaßnahmen und Instandhaltungskosten zu ermitteln sowie weiterer mit der Funktion der Maschine in Zusammenhang stehender Informationen auszuwerten und/oder zu visualisieren.

Der Nachteil einer derartigen Vorgehensweise - Übertragung von Maschinendaten über ein Netzwerk - besteht darin, dass die Absicherung dieser über das vorgenannte Netzwerk übertragenen Maschinendaten gegenüber Störeinflüssen, z. B. gegen einen Hackerangriff, aufwendig ist. Gelingt es z. B. einem Dritten, in das die Maschinendaten übertragende Netzwerk einzudringen, so kann dieser meistens, ohne nennenswerte Widerstände überwinden zu müssen, auf die Maschinensteuerung der entsprechenden Maschine zugreifen und somit deren Funktionsweise verändern.

Ein weiterer Nachteil dieser Vorgehensweise ist, dass die Maschinendaten nur über dieses Netzwerk in das Unternehmensnetzwerk gelangen. Andere Zugangspunkte könnten daher nur über zusätzliche proprietäre Einrichtungen aufwendig nachgerüstet bzw. realisiert werden.

Ein weiterer Nachteil besteht darin, dass die vorstehend genannte Vorgehensweise die Maschinensteuerung der betreffenden Produktions- oder Arbeitsmaschine zusätzlich belastet. Die Maschinensteuerung muss nicht nur die Funktion der Arbeits- und Produktionsmaschine steuern, sondern muss auch noch für den Transfer der Maschinendaten von ihrer Maschinensteuerung zum Unternehmensnetzwerk sorgen.

Aus der DE 21 2015 000 254 U1 ist eine Client-Vorrichtung zur Datenerfassung und Vorverarbeitung von prozessbezogenen Messdaten von mindestens einer CNC-Maschine oder einem Industrieroboter bekannt. Es werden prozessbezogene Daten an mindestens einen Datenempfänger, zum Beispiel einem cloud-basierten Server gesendet. Die Client-Vorrichtung enthält mindestens eine erste Datenkommunikationsschnittstelle für eine Kommunikation mit mindestens einer Steuereinrichtung der CNC-Maschine oder des Industrieroboters zum ständigen Aufzeichnen harter prozessbezogener Echtzeitdaten über mindestens einen Echtzeit-Datenkanal und zum Aufzeichnen von prozessbezogenen Nicht-Echtzeitdaten über mindestens einen Nicht-Echtzeit-Datenkanal. Es ist mindestens eine Datenverarbeitungseinheit zur Datenabbildung von zumindest den aufgezeichneten Nicht-Echtzeitdaten auf die aufgezeichneten harten Echtzeitdaten vorgesehen, um eine kontextualisierte Menge an prozessbezogenen Daten zu aggregieren. Des Weiteren weist die bekannte Client-Vorrichtung mindestens eine zweite Datenkommunikationsschnittstelle zum Übersenden der kontextualisierten Menge von prozessbezogenen Daten an den Datenempfänger und zur weiteren Datenkommunikation mit dem Datenempfänger auf. Gemäß den Angaben der vorgenannten Druckschrift soll die darin beschriebene Client-Vorrichtung die Lücke zwischen in hohem Maße proprietären industriellen Fertigungssystemen und Big-Data-Analysesystemen überbrücken, insbesondere soll die Client-Vorrichtung zur Erfassung und Vorverarbeitung von prozessbezogenen Massedaten für mindestens eine CNC-Maschine oder einem Industrieroboter sowie zum Senden der prozessbezogenen Massedaten an mindestens einen Datenempfänger dienen. Da die Rechenressourcen der heutzutage verwendeten Steuereinrichtungen zum Erfassung und Übertragen von prozessbezogenen Massedaten normalerweise nicht durch die CNC-Maschine oder dem Industrieroboter selbst bereitgestellt werden können, wird durch die erste Datenkommunikationsschnittstelle ein separates/selbstständiges autonomes System parallel zur Maschinensteuerung der CNC-Maschine oder des Industrieroboters bereitgestellt, welches der beschriebenen Client-Vorrichtung die Fähigkeit zum direkten Aufzeichnen von prozessbezogenen Massedaten und zum Vorverarbeiten und Übertragen von Daten an einen Datenempfänger, zum Beispiel einen Cloud-Server bietet. Es werden die harten prozessbezogenen Echtzeitdaten über mindestens einen Echtzeit-Datenkanal und prozessbezogene Nicht-Echtzeitdaten über mindestens einen Nicht-Echtzeit-Datenkanal aufgezeichnet. Die Datenverarbeitungseinheit der bekannten Client-Vorrichtung umfasst eine Datenverarbeitungseinheit zur Datenabbildung von zumindest den aufgezeichneten Nicht-Echtzeitdaten auf die aufgezeichneten Echtzeitdaten, um eine kontextualisierte Menge an prozessualen Daten zu aggregieren. Die zweite Datenkommunikationsschnittstelle der bekannten Client-Vorrichtung dient zum Senden der kontextualisierten Menge an prozessbezogenen Daten an den Datenempfänger und diese Schnittstelle ermöglicht auch die weitere Datenkommunikation zwischen der Client-Vorrichtung und dem Datenempfänger. Dieser Datenempfänger kann mindestens einen Server eines internen Netzwerks und/oder mindestens einen Server eines offenen Netzwerks, zum Beispiel des Internets, umfassen. Der letztgenannte Server weist vorzugsweise eine Cloud-Infrastruktur auf, auf der mehrere Datenanalyseanwendungen ausgeführt sind. Die Cloud-Infrastruktur selbst kann in ein internes Netzwerk, zum Beispiel innerhalb des Werks, oder in ein offenes Netzwerk integriert sein. Zum Beispiel kann das interne Netzwerk ein bestehendes lokales Netzwerk innerhalb des Werks sein, in dem das eine oder die mehreren eingebetteten Systeme der Maschinensteuerung integriert sind und das bereits zur Übertragung von Daten, zum Beispiel Befehlen, Befehlsprogrammen oder anderen Daten verwendet wird. Zusätzlich oder alternativ zu der internen lokalen Netzwerkkommunikation kann die Client-Vorrichtung eine Internet-Schnittstelle umfassen. Dazu verwendet die Kommunikation der Client-Vorrichtung mit dem Internet aus Sicherheitsgründen vorzugsweise strikt ausgehende Kommunikation, was im Grunde bedeutet, dass jede Kommunikation immer durch die Client-Vorrichtung eingeleitet wird und dass dieser Client nicht adressierbar ist. Gemäß einer bevorzugten Ausführungsform der bekannten Client-Vorrichtung ist diese auch für die Cybersicherheit der eingebetteten Steuereinrichtung der CNC-Maschine oder des Industrieroboters verantwortlich. Sie stellt daher vorzugsweise Sicherheitsfunktionen für die verbundenen Steuereinrichtungen bereit, nämlich insbesondere Überwachung sämtlicher Kommunikationen der Steuereinrichtung auf unregelmäßige Kommunikation und ein wahlweises Sperren der eingebetteten Steuereinrichtung gegen irgendeine bedrohliche Server-Kommunikation. Folglich weist die Maschinensteuerung der CNC-Maschine oder des Industrieroboters keine direkte Verbindung mit dem Internet auf, wodurch wiederum die Ressourcen und die Komplexität der Steuereinrichtung verlängert werden. Darüber erfolgt die Verwendung einer separaten/autonomen Client-Vorrichtung in der Nähe der Steuereinrichtung für die Internet-Kommunikation der lokalen Automatisierungsausrüstung auch die Einschränkungen der IT-Richtlinie des Kunden.

Die bekannte Client-Vorrichtung besitzt wiederum den Nachteil, dass die Massendaten über ein Netzwerk übertragen werden, sodass die Absicherung dieser Daten aufwendig ist. Auch hier gilt, dass für den Fall, dass es einem Dritten gelingt, in das von der bekannten Client-Vorrichtung verwendeten Netzwerk einzudringen, dieser, ohne nennenswerte Widerstände überwinden zu müssen, auf die Maschinensteuerung der entsprechenden Maschine zugreifen sowie deren Funktionsweise verändern kann. Die bekannte Client-Vorrichtung erlaubt es zwar, die Maschinensteuerung der betreffenden Maschine zu entlasten, indem ein von der Maschinensteuerung separates/unabhängiges System bereitgestellt wird. Der hierzu erforderliche apparative und softwaremäßige Aufwand ist jedoch beträchtlich und daher bestenfalls für große Big-Data-Anwendungen zu rechtfertigen.

Aus N N: "Wireless Connect add wireless to any cnc", 9. November 2017 (2017-11-09), Seiten 1-2, XP05559507 ist eine Vorrichtung bekannt, die es ermöglicht, einer CNC-Maschine eine WLAN-Konnektivität zu verleihen. Aus GB 2 208 553 A ist ein Kommunikationsadapter bekannt.

Es ist daher Aufgabe der vorliegenden Erfindung, eine Maschine enthaltend eine Vorrichtung zur Bereitstellung von Maschinendaten an zumindest ein maschinenexternes Peripheriegerät dahingehend zu verbessern, dass ein abgesicherter Transfer von Maschinendaten vereinfacht und eine Entlastung der Maschinensteuerung einer die erfindungsgemäße Vorrichtung verwendenden Maschine erzielt wird. Außerdem soll ein Verfahren zur Bereitstellung von Maschinendaten geschaffen werden.

Zur Lösung dieser Aufgabe wird erfindungsgemäß vorgeschlagen, dass dieser mindestens eine Mikrocomputer einen vordefinierten Satz von Befehlen enthält, und dass ein der Vorrichtung zugeführtes Befehlssignal mindestens eines Peripheriegeräts über die Kommunikationseinrichtung dem Mikrocomputer zugeführt ist, dass der den vordefinierten Satz von Befehlen enthaltende Mikrocomputer derart ausgebildet ist, dass er nur dann ein Abfragesignal über die Datenverbindung an die Maschinensteuerung der Maschine sendet, wenn das vom Peripheriegerät der Vorrichtung zugeführte Befehlssignal einem Signal aus dem vordefinierten Satz von Befehlen entspricht, und dass der Mikrocomputer von der Maschinensteuerung der Maschine abgefragte Maschinendaten über die Kommunikationseinrichtung zu dem anfragenden Peripheriegerät sendet, dass die Datenverbindung und/oder die weiteren Datenverbindung derart ausgebildet sind, dass sie in einer ersten Flussrichtung nur eine eingeschränkte Übertragung von Daten und/oder Befehlen von der Vorrichtung zur Maschinensteuerung und/oder von der Kommunikationseinrichtung zum Mikrocomputer erlauben, und dass die Datenverbindung und/oder die weitere Datenverbindung derart ausgebildet ist oder sind, dass sie in einer zur ersten Flussrichtung entgegengesetzten zweiten Flussrichtung die Übertragung von Maschinendaten von der Maschinensteuerung der Maschine an die Vorrichtung erlaubt.

Das erfindungsgemäße Verfahren sieht vor, dass eine Maschine nach einem der Ansprüche 1 bis 10 verwendet wird.

Durch die erfindungsgemäßen Maßnahmen wird in vorteilhafter Art und Weise eine erhöhte Betriebssicherheit der erfindungsgemäßen Produktions- oder Arbeitsmaschine erreicht. Indem erfindungsgemäß vorgesehen ist, dass durch die vorstehend beschriebenen Maßnahmen nur ein Befehlssignal, insbesondere ein Abfragesignal, von der Vorrichtung zu der Maschine übertragbar ist, wenn das Anforderungssignal in einem Satz von vordefinierten Befehlssignalen, also in einem proprietären Befehlssatz, enthalten ist, wird erreicht, dass durch externe Störeinflüsse, z. B. einen Hackerangriff, auftretende Störgrößen zuverlässig ausgeschaltet werden können. Die erfindungsgemäßen Maßen bewirken, dass durch die der Maschinensteuerung vorgeschaltete erfindungsgemäße Vorrichtung die Maschinensteuerung von dem oder den Peripheriegeräten getrennt ist, da nicht-proprietäre Befehlssignale von der erfindungsgemäßen Vorrichtung blockiert werden und somit nicht zur Maschinensteuerung gelangen können. So wird in vorteilhafter Art und Weise die Cybersicherheit der Maschinensteuerung erhöht. Da der Informationstransfer, insbesondere der Datentransfer zwischen der Maschine und dem oder den Peripheriegeräten im Wesentlichen von der erfindungsgemäßen Vorrichtung bewerkstelligt wird, wird in vorteilhafter Art und Weise auch die Maschinensteuerung von dieser Aufgabe entlastet.

Eine vorteilhafte Weiterbildung der Erfindung sieht vor, dass die Vorrichtung einen Speicher aufweist, in dem die von der Maschine an die Vorrichtung gesandten Maschinendaten ganz oder teilweise zumindest temporär abspeicherbar sind. Eine derartige Vorgangsweise besitzt den Vorteil, dass dieser Speicher auch zum Backup von Maschinendaten verwendet werden kann.

Eine weitere vorteilhafte Weiterbildung der Erfindung sieht vor, dass die Kommunikationseinrichtung der erfindungsgemäßen Vorrichtung mindestens eine Schnittstelle aufweist, über die eine Anbindung eines Peripheriegeräts möglich ist. Eine derartige Maßnahme bewirkt in vorteilhafter Art und Weise, dass die Maschinendaten von der erfindungsgemäßen Vorrichtung nicht nur an ein Netzwerk, sondern auch an lokale Peripheriegeräte wie z. B. ein Tablet, etc. übertragbar sind. Es ist somit insbesondere möglich, unmittelbar an der Maschine auf die entsprechenden Daten zuzugreifen, was insbesondere für Service-, Wartungs-, Reparatur- und Überwachungszwecke von Vorteil ist, da der diese Arbeit Durchführende direkt an der Maschine auf die entsprechenden Daten zugreifen kann.

Eine weitere vorteilhafte Weiterbildung der Erfindung sieht vor, dass die Vorrichtung mindestens eine weitere Schnittstelle aufweist, über die die Vorrichtung mit einem weiteren Peripheriegerät verbindbar ist. Eine derartige Maßnahme erlaubt es zum Beispiel, eine Datenbank, eine speicherprogrammierte Steuerung oder eine ähnliche Vorrichtung an die Maschine anzukoppeln.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der einzigen Figur beschrieben wird. Es zeigt:

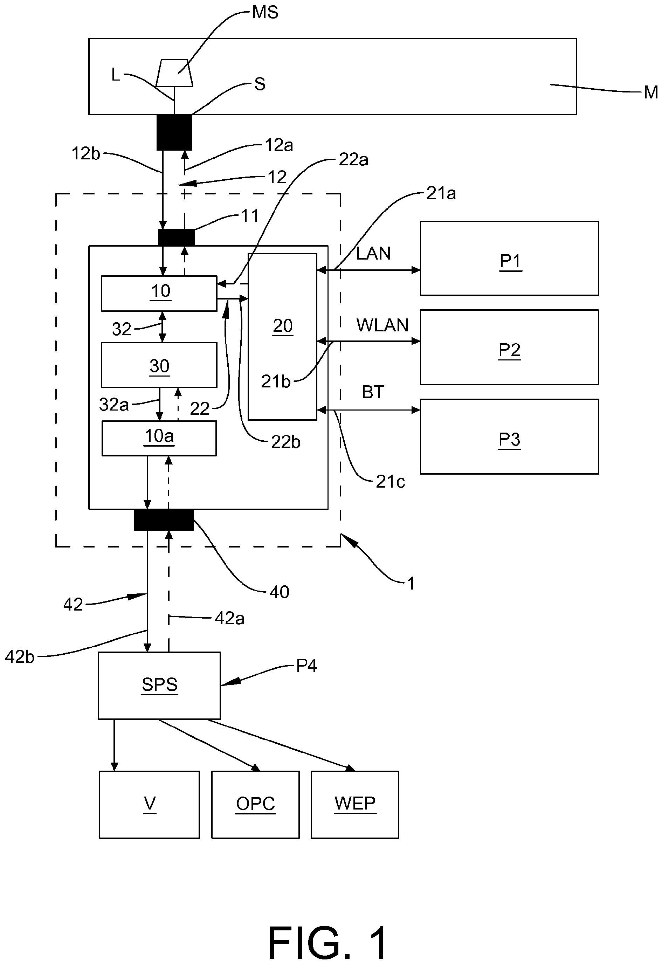

- Figur 1: eine schematische Darstellung eines Ausführungsbeispiels zur Bereitstellung von Maschinendaten.

Die Figur 1 zeigt schematisch eine Maschine M, welche als Produktionsmaschine und/oder als Arbeitsmaschine ausgebildet ist. Wie sich für den Fachmann aus der nachstehenden Beschreibung sofort ergibt, ist es für das Verständnis des Ausführungsbeispiels unerheblich, ob diese Maschine eine Maschine zur Herstellung oder Veränderung eines Gegenstandes oder eine Arbeitsmaschine zur Durchführung eines Arbeitsverfahrens ist. Diese Maschine M wird daher nachstehend nicht weiter beschrieben. Wesentlich ist nur, dass diese Maschine M eine Maschinensteuerung MS aufweist, welche die Funktion der Maschine M steuert. Im Rahmen dieser Anmeldung soll der Begriff "steuern" in seiner breitesten Bedeutung zu verstehen sein, insbesondere also auch ein "Regeln" und ein "Überwachen" dieser Maschine M umfassen.

Üblicherweise werden bei derartigen computergesteuerten Maschinen M die für eine Grundfunktion der Maschine M erforderlichen Daten in einem Speicher der Maschinensteuerung MS abgelegt. Die zur Durchführung eines bestimmten Produktions- und/oder Arbeitsvorgangs erforderlichen Daten sind in einem externen Rechner abgelegt oder werden von diesem erzeugt. In der Maschinensteuerung MS werden auch entsprechende Maschinendaten, z. B. Kenngrößen für die Maschineneffektivität, Produktions- und Verschleißdaten, etc. gespeichert, welche beim Betrieb der Maschine M anfallen.

Es ist nun vorgesehen, dass die Maschinensteuerung MS über eine Datenverbindung 12, insbesondere einen CAN-Bus, mit einer allgemein mit 1 bezeichneten Vorrichtung verbunden ist, welche einen Transfer der Maschinendaten ermöglicht. Die Funktion der Vorrichtung 1 besteht also im Wesentlichen darin, Maschinendaten von der Maschinensteuerung MS abzufragen und diese Daten zur Weiterleitung an mindestens ein Peripheriegerät (wie nachstehend beschrieben) bereit zu halten. Die Vorrichtung 1 weist hierzu einen Mikrocomputer 10 auf, welcher mit einer Maschinendaten-Schnittstelle 11 der Vorrichtung 1 verbunden ist. Diese Maschinendaten-Schnittstelle 11 der Vorrichtung 1 ist mit der Datenverbindung 12 verbunden, welche ihrerseits mit einer entsprechenden Schnittstelle S der Maschine M verbunden ist. Diese Schnittstelle S ist über eine Datenleitung L mit der Maschinensteuerung MS verbunden. Der Mikrocomputer 10 sendet dann über die Schnittstelle 11 und die Datenverbindung 12 einen Abfragebefehl an die Maschinensteuerung MS, welcher bewirkt, dass über die Datenverbindung 12 Maschinendaten von der Maschinensteuerung MS zu der Vorrichtung 1 geleitet werden.

Die Vorrichtung 1 weist des weiteren eine Kommunikationseinrichtung 20 auf, welche über eine Datenverbindung 22 mit dem Mikrocomputer 10 verbunden ist. Diese Kommunikationseinrichtung 20 stellt eine oder mehrere Schnittstellen 21a-21c zu einem oder mehreren maschinenexternen Peripheriegeräten P1, P2, P3 bereit. Im hier beschriebenen Ausführungsbeispiel ist exemplarisch vorgesehen, dass die Kommunikationseinrichtung 20 über drei Schnittstellen 21a-21c verfügt, wobei die erste Schnittstelle 21a die Anbindung eines oder mehrerer Peripheriegeräte P1, wie z. B. eines Servers, über ein drahtgebundenes Netzwerk LAN, die zweite Schnittstelle 21b die Anbindung eines oder mehrerer weiterer Peripheriegeräte P2 über ein Drahtlos-Netzwerk WLAN und die dritte Schnittstelle 21c die Anbindung eines oder mehrerer dritter Peripheriegeräte P3 über eine Bluetooth-Verbindung BT ermöglicht.

Zur Abfrage der Maschinendaten aus der Maschinensteuerung MS der Maschine M sendet ein bestimmtes Peripheriegerät P1, P2 und/oder P3 über die entsprechende Schnittstelle 21a, 21b und/oder 21c ein Befehlssignal, insbesondere einen Anforderungsbefehl, an die Vorrichtung 1, welcher von der Kommunikationseinrichtung 20 über die Datenleitung 22 zum Mikrocomputer 10 geleitet wird. Als Reaktion auf einen derartigen Anforderungsbefehl sendet der Mikrocomputer 10 über die Maschinendaten-Schnittstelle 11 und die Datenverbindung 12 einen Abfragebefehl zur Maschinensteuerung MS der Maschine M, welcher bewirkt, dass die Maschinensteuerung MS über die Datenverbindung 12 zum Mikrocomputer 10 die entsprechenden Maschinendaten sendet, welcher diese dann über die Kommunikationseinrichtung 20 und die entsprechende Schnittstelle 21a-21c an das die Abfrage von Maschinendaten initiierende Peripheriegerät P1-P3 sendet. Durch die vorstehend beschriebene Vorgangsweise wird in vorteilhafter Art und Weise erreicht, dass die Maschinensteuerung MS der Maschine M entlastet wird, da diese die für den Transfer und/oder die Bereitstellung der Maschinendaten an eine maschinenexterne Einrichtung erforderlichen Operationen nicht mehr selbst durchführen muss. Vielmehr werden diese von der Vorrichtung 1 übernommen. Die Maschinensteuerung MS muss lediglich auf einen entsprechenden Abfragebefehl der Vorrichtung 1 die entsprechenden in ihrem Speicher abgelegten Maschinendaten an die Vorrichtung 1 senden. Ein derartiger Vorgang ist weniger komplex als ein Transfer von Maschinendaten über ein Intranet oder das Internet, bei dem komplexere Transferprotokolle abzuhandeln sind.

Um nun die Maschinendaten und/oder die Maschinensteuerung gegenüber externen Störeinflüssen, wie z. B. einen Hackerangriff, abzusichern, ist vorgesehen, dass der Mikrocomputer 10 nur bestimmte, definierte Befehle verarbeiten kann und einen ihm zugeführten Befehl, der außerhalb dieses definierten Befehlssatzes liegt, nicht erkennt und/oder nicht ausführt. Dies wird durch eine sogenannte proprietäre Ausgestaltung des Mikrocomputers 10 erreicht, d. h. der Mikrocomputer 10 verwendet eine herstellerspezifische Hardware und/oder Software. Es wird bevorzugt, dass insbesondere die Software des Mikrocomputers 10 als proprietäre Software ausgestaltet ist, d. h. sie verwendet kein Betriebssystem wie Windows, etc. Der derart ausgestaltete Mikrocomputer 10 weist also einen Satz definierter Befehle auf, ein außerhalb dieses proprietärer Befehlssatzes liegender Befehl wird folglich nicht erkannt und/oder ausgeführt. Dem Fachmann ist die Herstellung und die Funktion eines derartigen proprietären Mikrocomputers 10 bekannt, so dass diese nicht weiter beschrieben werden muss.

Die vorgenannte Ausgestaltung des Mikrocomputers 10 als proprietäre Lösung besitzt den Vorteil, dass selbst dann, wenn der Vorrichtung 1 über die Kommunikationseinrichtung 20 ein externer Störbefehl, wie z. B. durch einen Hackerangriff ausgelöst, zugeführt wird, der Mikrocomputer 10 diesen externen Störbefehl nicht verarbeiten kann, so dass dieser Störbefehl somit wirkungslos bleibt. Hierdurch wird eine hohe Absicherung der Maschinendaten der Maschine M erreicht.

Vorzugsweise kann noch vorgesehen sein, dass die Datenverbindung 12 zwischen Mikrocomputer 10 und Maschinensteuerung MS und/oder die Datenverbindung 22 zwischen Mikrocomputer 10 und Kommunikationseinrichtung 20 hardwaremäßig derart ausgestaltet ist, dass hierdurch eine weitere Absicherung der Maschinendaten erreicht wird. Derartige Datenverbindungen 12 bzw. 22 sind dem Fachmann bekannt, so dass auf deren hardwaremäßigen Realisierung hier nicht eingegangen werden muss. Die grundsätzliche Funktionsweise derartiger Datenverbindungen 12 und/oder 22 ist, dass sie nur eine eingeschränkte Übertragung von Daten und/oder Befehlen in einer durch eine Linie 12a bzw. 22a charakterisierten Flussrichtung - von der Vorrichtung 1 zur Maschinensteuerung MS bzw. von der Kommunikationseinrichtung 20 zum Mikrocomputer 10 - erlauben, es aber andererseits ermöglicht, in einer durch die Linien 12b bzw 22b charakterisierten entgegengesetzten Flussrichtung die Maschinendaten hinreichend rasch von der Maschinensteuerung MS zur Vorrichtung 1 und somit zum Mikrocomputer 10 und von dort zur Kommunikationseinrichtung 20 zu übertragen. Die Datenverbindungen 12 und/oder 22 sind daher vorzugsweise - vereinfacht dargestellt - im Hinblick auf die jeweils zu übertragenden Signale unidirektional ausgebildet, derart das in einem ersten Kanal der Datenverbindungen 12 und/oder 22 - repräsentiert durch die Linien 12a bzw. 22a - eine eingeschränkte Übertragung von Daten und/oder Befehlen und in der Gegenrichtung, also in einem zweiten Datenkanal - repräsentiert durch die Linien 12b bzw. 22b - Maschinendaten unidirektional von der Maschinensteuerung MS und somit zum Mikrocomputer 10 übertragen werden.

Beim beschriebenen Ausführungsbeispiel ist optional vorgesehen, dass die Vorrichtung 1 außer dem Mikrocomputer 10 noch einen Speicher 30 aufweist, welcher über eine Datenleitung 32 mit dem Mikrocomputer 10 verbunden ist. Der Speicher 30 kann als ein nicht-flüchtiger Speicher oder als ein flüchtiger Speicher ausgebildet sind, wobei aus Gründen einer rascheren Datenübertragung eine Ausbildung des Speichers 30 als ein flüchtiger Speicher, z. B. ein S-RAM, bevorzugt wird, wobei dieser flüchtige Speicher vorzugsweise batteriegepuffert ist. Eine derartige Maßnahme besitzt den Vorteil, dass Maschinendaten in der Vorrichtung 1 nicht nur sofort weitergeleitet, sondern zwischengespeichert werden. Ein weiterer Vorteil dieser Vorgangsweise ist, dass die Maschinendaten getrennt von der Maschinensteuerung MS gespeichert sind. Es wird hierdurch also die Möglichkeit eines Backups der Maschinendaten in der Vorrichtung 1 ermöglicht, so dass diese Maschinendaten auch bei einem Defekt der Maschinensteuerung MS erhalten bleiben.

In dem hier beschriebenen Ausführungsbeispiel ist des Weiteren optional vorgesehen, dass die Vorrichtung 1 eine weitere Schnittstelle 40 besitzt, welche - entsprechend der Funktion der Kommunikationseinrichtung 20 - die Anbindung von weiteren Peripheriegeräten P4, z. B. einem Datenbanksystem oder einer Steuerung, erlaubt.

Im hier beschriebenen Ausführungsbeispiel ist vorgesehen, dass diese weitere Schnittstelle 40 über eine Datenverbindung 42 mit einer maschinenexternen, vorzugsweise speicherprogrammierbare Steuerung SPS verbunden wird, welche ihrerseits mit sekundären Peripheriegeräten wie einer Visualisierungseinrichtung V, einem OPC-Modul, welches es erlaubt, Maschinendaten weiterzuverarbeiten oder insbesondere semantisch zu erfassen, und einer weiteren Kommunikationsschnittstelle WEP kommuniziert. Vorzugsweise ist hierbei wiederum vorgesehen, dass die Datenverbindung 42 entsprechend den Datenverbindungen 12 und/oder 22 ausgebildet ist, dass sie also zwischen dem weiteren Peripheriegerät P4 und der Vorrichtung 1 nur einen eingeschränkten Datentransfer, in der umgekehrten Richtung, also von der Vorrichtung 1 zum vierten Peripheriegerät P4, einen hinreichend großen Datentransfer erlaubt.

Es ist grundsätzlich möglich, dass die weitere Schnittstelle 40 mit dem vorstehend beschriebenen Mikrocomputer 10 verbunden ist, so dass dieser ein über die Schnittstelle 40 der Vorrichtung 1 zugeleitetes Anforderungssignal des oder der Peripheriegeräte P4 verarbeitet und Maschinendaten über die Schnittstelle 40 und die Datenverbindung 42 zu dem oder den vierten Peripheriegeräten P4 sendet.

Wie aber in Figur 1 dargestellt, wird bevorzugt, dass die Vorrichtung 1 einen weiteren Mikrocomputer 10a aufweist, welcher entsprechend dem ersten Mikrocomputer 10 ausgebildet ist. Es ist daher nicht mehr erforderlich, den Aufbau und die Funktionsweise des weiteren Mikrocomputers 10a hier erneut zu beschreiben. Es ist grundsätzlich möglich, dass der weitere Mikrocomputer 10a mit der Maschinendaten-Schnittstelle 11 verbunden ist. Es wird aber - wie ebenfalls aus Figur 1 ersichtlich - bevorzugt, dass der weitere Mikrocomputer 10a über eine Datenleitung 32a auf den Speicher 30 der Vorrichtung 1 zugreift, in welchem die vom ersten Mikrocomputer 10 angeforderten Maschinendaten gespeichert sind. Der weitere Mikrocomputer 10a kann somit auf bereits vom ersten Mikrocomputer 10 abgerufene Maschinendaten zugreifen.

Die Funktionsweise der Vorrichtung 1 ist nun wie folgt: Um Maschinendaten der Maschine M über die erste Schnittstelle 21a der Kommunikationseinrichtung 20 der Vorrichtung 1 zu einem oder mehreren Peripheriegeräten P1-P3, z. B. einem Server des Netzwerks, zu leiten, wird z. B. ein Anforderungssignal dieses Peripheriegeräts P1, hier des Servers, zu der ersten Schnittstelle 21a geleitet. Die Kommunikationseinrichtung 20 leitet dieses Anforderungssignal über die Datenverbindung 12 - durch die strichlierte Linie 22a charakterisiert - zum Mikrocomputer 10 weiter. Dieser ist - wie vorstehend beschrieben - derart ausgebildet und konfiguriert, dass er nur einen definierten Satz von proprietären Befehl verarbeiten kann. Wird ihm über die Kommunikationseinrichtung 20 ein ordnungsgemäßes Anforderungssignal übermittelt, also ein Signal, welches im proprietären Befehlssatz des Mikrocomputers 10 enthalten ist, so erkennt der Mikrocomputer 10 dieses und sendet über die Datenverbindung 12 - wie durch die strichlierte Linie 12a charakterisiert - ein Abfragesignal an die Maschinensteuerung MS der Maschine M. Die Maschinensteuerung MS sendet daraufhin die entsprechenden Maschinendaten - wie durch die durchgezogene Linie 12b charakterisiert - über die Datenverbindung 12 zu der Vorrichtung 1.

Diese Maschinendaten gelangen über die Maschinendaten-Schnittstelle 11 zu dem Mikrocomputer 10 und werden von diesem über die Datenverbindung 22 - wie durch die durchgezogene Linie 22b charakterisiert - zu der ersten Kommunikationseinrichtung 20, welche diese dann über ein entsprechendes Netzwerk - hier das drahtgebundene Netzwerk LAN - an das anfordernde Peripheriegerät P1 weiterleitet.

Wie ebenfalls bereits vorstehend beschrieben, kann vorgesehen sein, dass die vom Mikrocomputer 10 angeforderten Maschinendaten im Speicher 30 abgespeichert werden, so dass sie z. B. für einen Zugriff durch den weiteren Mikrocomputer 10a zur Verfügung stehen.

Entsprechende Überlegungen gelten für die weiteren Schnittstellen 21b und 21c der ersten Kommunikationseinrichtung 20 sowie für die Bereitstellung von Daten über die weitere Schnittstelle 40. Ein Anforderungsbefehl des oder der vierten Peripheriegeräte P4 wird über die Datenverbindung 42 - durch die strichlierte Linie 42a charakterisiert - zu der Schnittstelle 40 und in Folge zum zweiten Mikrocomputer 10a geleitet wird. Dieser ruft aus dem Speicher 30 die entsprechenden Maschinendaten ab und sendet diese über die Datenverbindung 42 - durch die durchgezogene Linie 42b charakterisiert - zum Peripheriegerät P4.

Die vorstehende Beschreibung geht davon aus, dass Maschinendaten von der Maschine M abgefragt werden, indem ein Peripheriegerät P1, P2, P3 oder P4 ein erstes, zweites, drittes oder viertes Anforderungssignal an die Vorrichtung 1 sendet, der Mikrocomputer 10 und/oder 10a dieses Anforderungssignal darauf, ob es im vordefinierten Satz von proprietären Befehlen, also im proprietären Befehlssatz, enthalten ist, und wenn er ein ordnungsgemäßes Anforderungssignal erkennt, wird das entsprechende Abfragesignal erzeugt, welches an die Maschinensteuerung MS der Maschine M geleitet wird. Die entsprechenden Maschinendaten werden dann wie beschrieben zu dem anfragenden Peripheriegerät P1, P2, P3 oder P4 zurückgeleitet und somit diesem Peripheriegerät P1, P2, P3 oder P4 zur Verfügung gestellt.

Bevorzugt wird, dass mindestens eine und vorzugsweise alle Schnittstellen 21a, 21b, 21c und/oder 40 derart ausgebildet sind, dass von den Peripheriegeräten P1, P2, P3 und/oder P4 nur zu der Vorrichtung 1 nur das Befehlssignal, insbesondere das von dem oder den Peripheriegeräten P1, P2, P3, P4 erzeugte Anforderungssignal, übertragbar ist. Eine derartige Maßnahme besitzt den Vorteil einer erhöhten Cybersicherheit.

Natürlich ist die vorstehend beschriebene Ausgestaltung nicht auf ein Anforderungssignal eines Peripheriegeräts P1, P2, P3 oder P4 und ein Abfragesignal der Vorrichtung 1 beschränkt. Vielmehr eignen sich die Vorrichtung 1 sowie ein diese Vorrichtung 1 verwendendes Verfahren auch zur Bearbeitung von anderen Befehlen. Die Vorrichtung 1 überprüft also, ob ihr ein zugeführtes Befehlssignal in dem proprietären Befehlssatz enthalten ist und erzeugt, falls dies verifiziert wird, ein entsprechendes Abfragesignal.

In der vorstehenden Beschreibung wird davon ausgegangen, dass der Mikrocomputer 10 und/oder der Mikrocomputer 10a und die Kommunikationseinrichtung 20 hard - und/oder software-mäßig als individuelle Bestandteile der Vorrichtung 1 ausgebildet sind. Dies ist aber nicht zwingend erforderlich. Vielmehr ist es möglich, die Kommunikationseinrichtung 20 zumindest funktional in den Mikrocomputer 10 und/oder dem Mikrocomputer 10a zu integrieren, sodass der derart ausgebildete "Mikrocomputer" auch die Kommunikation mit den Peripheriegeräten P1 - P4 übernimmt. In diesem Fall ist es dann nicht zwingend erforderlich, eine separate Kommunikationseinrichtung 20 in der Vorrichtung 1 vorzusehen. Dem Fachmann ist aus dem Vorstehendem ersichtlich, dass folglich der Begriff "Mikrocomputer", wie er in den folgenden Ansprüchen verwendet wird, in seiner breitesten Bedeutung zu verstehen ist und auch eine Kombination aus dem Mikrocomputer 10 und/oder dem Mikrocomputer 10a und der Kommunikationseinrichtung 20 umfasst.

Zusammenfassend ist festzuhalten, dass durch die beschriebene Vorrichtung in vorteilhafter Art und Weise nicht nur eine Entlastung der Maschinensteuerung MS erzielt wird. Vielmehr ermöglicht die beschriebene Ausgestaltung des ersten Mikrocomputers 10 und/oder des zweiten Mikrocomputers 10a als eine proprietäre Lösung eine Absicherung der Maschinendaten gegen externe Störeinflüsse, wie sie z. B. durch einen Hackerangriff hervorgerufen werden können. Die Speicherung der von der Vorrichtung 1 abgerufenen Maschinendaten im Speicher 30 der Vorrichtung 1 stellt eine weitere Absicherung der Maschinendaten dar, da diese dadurch unabhängig von dieser gespeichert werden und somit bei einem Defekt der Maschinensteuerung zur Verfügung stehen.

## Patentansprüche

1. Maschine (M) enthaltend eine Vorrichtung (1) zur Bereitstellung von Maschinendaten, wobei die Maschine (M) eine Maschinensteuerung (MS) aufweist, in der die Maschinendaten gespeichert sind, wobei die Maschinensteuerung (MS) über eine Datenverbindung (12) mit der Vorrichtung (1) verbunden ist, wobei die Vorrichtung (1) die von der Maschine (M) bereitgestellten Maschinendaten an mindestens ein maschinenexternes Peripheriegerät weiterleitet, eine Maschinendaten-Schnittstelle (11) aufweist, die über die Datenverbindung (12) mit der Maschine (M) verbunden ist-und mindestens einen Mikrocomputer (10; 10a) besitzt, der mit der Maschinendaten-Schnittstelle (11) verbunden ist, wobei die Vorrichtung (1) mindestens eine Kommunikationseinrichtung (20) besitzt, welche über eine weitere Datenverbindung (22) mit dem mindestens einen Mikrocomputer (10; 10a) verbunden ist und mindestens eine Schnittstelle (21a, 21b, 21c) aufweist, über welche die Vorrichtung (1) mit mindestens einem Peripheriegerät (P1, P2, P3) verbindbar ist, **dadurch gekennzeichnet, dass** dieser mindestens eine Mikrocomputer (10; 10a) einen vordefinierten Satz von Befehlen enthält, und dass ein der Vorrichtung (1) zugeführtes Befehlssignal mindestens eines Peripheriegeräts (P1, P2, P3) über die Kommunikationseinrichtung (20) dem Mikrocomputer (10; 10a) zugeführt ist, dass der den vordefinierten Satz von Befehlen enthaltende Mikrocomputer (10; 10a) derart ausgebildet ist, dass er nur dann ein Abfragesignal über die Datenverbindung (12) an die Maschinensteuerung (MS) der Maschine (M) sendet, wenn das vom Peripheriegerät (P1, P2, P3) der Vorrichtung (1) zugeführte Befehlssignal einem Signal aus dem vordefinierten Satz von Befehlen entspricht, und dass der Mikrocomputer (10; 10a) von der Maschinensteuerung (MS) der Maschine (M) abgefragte Maschinendaten über die Kommunikationseinrichtung (20) zu dem anfragenden Peripheriegerät (P1, P2, P3) sendet, dass die Datenverbindung (12) und/oder die weiteren Datenverbindung (22) derart ausgebildet sind, dass sie in einer ersten Flussrichtung nur eine eingeschränkte Übertragung von Daten und/oder Befehlen von der Vorrichtung (1) zur Maschinensteuerung (MS) und/oder von der Kommunikationseinrichtung (20) zum Mikrocomputer (10; 10a) erlauben, und dass die Datenverbindung (12) und/oder die weitere Datenverbindung (22) derart ausgebildet ist oder sind, dass sie in einer zur ersten Flussrichtung entgegengesetzten zweiten Flussrichtung die Übertragung von Maschinendaten von der Maschinensteuerung (MS) der Maschine (M) an die Vorrichtung (1) erlaubt.

2. Maschine nach Anspruch 1, **dadurch gekennzeichnet, dass** die Vorrichtung (1) mindestens einen Speicher (30) aufweist, in welchem die von der Maschine (M) an die Vorrichtung (1) gesendeten Maschinendaten zumindest teilweise zumindest temporär abspeicherbar sind.

3. Maschine nach einem der vorangehenden Ansprüche, **dadurch gekennzeichnet, dass** die Kommunikationseinrichtung (20) mindestens eine Schnittstelle (21a, 21b, 21c) besitzt, über welche eine drahtgebundene oder drahtlose Datenkommunikation zwischen mindestens einem Peripheriegerät (P1, P2, P3) und der Vorrichtung (1) durchführbar ist.

4. Maschine nach einem der vorangehenden Ansprüche, **dadurch gekennzeichnet, dass** die Vorrichtung (1) mindestens eine weitere Schnittstelle (40) besitzt, über welche von der Maschine (M) an die Vorrichtung (1) gesendete und gegebenenfalls im Speicher (30) zwischengespeicherte Maschinendaten einem weiteren Peripheriegerät (P4) zuführbar sind.

5. Maschine nach Anspruch 4, **dadurch gekennzeichnet, dass** die weitere Schnittstelle (40) über eine weitere Datenverbindung (42) mit einer maschinenexternen Steuerung (SPS) verbunden ist, welche ihrerseits mit dem weiteren Peripheriegerät (P4) verbunden ist.

6. Maschine nach einem der vorangehenden Ansprüche, **dadurch gekennzeichnet, dass** die oder mindestens eine Schnittstelle (21a, 21b, 21c, 40) derart ausgebildet ist, dass zu der Vorrichtung (1) nur das Befehlssignal, insbesondere ein von mindestens einem Peripheriegerät (P1, P2, P3, P4) erzeugtes Anforderungssignal, übertragbar ist.

7. Maschine nach Anspruch 6, **dadurch gekennzeichnet, dass** die weitere Schnittstelle (40) mit mindestens einem Mikrocomputer (10a) verbunden ist.

8. Maschine nach einem der vorangehenden Ansprüche, **dadurch gekennzeichnet, dass** die Vorrichtung (1) mindestens zwei proprietäre Mikrocomputer (10, 10a) aufweist.

9. Maschine nach einem der vorangehenden Ansprüche, **dadurch gekennzeichnet, dass** die weitere Datenverbindung (12) zwischen der Vorrichtung (1) und der Maschine (M) derart ausgebildet ist, dass von der Vorrichtung (1) zur Maschine (M) nur das vom Mikrocomputer (10; 10a) erzeugte Abfragesignal übertragbar ist.

10. Maschine nach einem der vorangehenden Ansprüche, **dadurch gekennzeichnet**, das mindestens eine der Datenverbindungen (12, 22, 42) derart ausgebildet ist, dass Maschinendaten von der Maschinensteuerung (MS) zu mindestens einem Mikrocomputer (10, 10a) und/oder dem mindestens einen Speicher (30) übertragbar sind.

11. Verfahren zur Bereitstellung von Maschinendaten einer Maschine (M), **dadurch gekennzeichnet, dass** eine Maschine (M) nach einem der Ansprüche 1 bis 10 verwendet wird.

## Claims

1. Machine (M) with a device (1) for providing machine data, the machine (M) comprising a machine control (MS), in which the machine data Is stored, the machine control (MS) being connected via a data connection (12) with the device (1), whereby the device (1), which sends the machine data provided by the machine (M) to at least one machine external peripheral device, comprises a machine data interface (11), which is connected via the data connection (12) with the machine (M), and at least one microcomputer (10; 10a), which is connected with the machine data interface (11), wherein the device (1) comprises at least one communication device (20), which is connected via a further data connection (22) with the at least one microcomputer (10; 10a), and at least one interface (21a, 21b, 21c), via which the device (1) can be connected with at least one peripheral device (P1, P2, P3), **characterized in that** said at least one microcomputer (10; 10a) comprises a predefined set of instructions, and that a command signal of at least one peripheral device (P1, P2, P3) supplied to the device (1) is sent via the communication device (20) to the microcomputer (10; 10a), that the microcomputer (10; 10a) comprising said predefined set of command is designed in such a way that it only sends a query signal via the data connection (12) to the machine control (MS) of the machine (M) when the command signal sent from the peripheral device (P1, P2, P3) to the device (1) corresponds to a signal contained in the predefined set of commands, and that the microcomputer (10; 10a) sends machine data requested from the machine control (MS) of the machine via the communication device (20) to the requesting peripheral device (P1, P2, P3), that the data connection (12) and/or the further data connection (22) is defined in such a way that in a first flow direction only a limited transmission of data and/or signals from the device (1) to the machine control (MS) and/or from the communication device (20) to the microcomputer (10; 10a) is permitted, and that the data connection (12) and/or the further data connection (22) is designed in such a way that In a second flow direction opposite to the first flow direction the transmission of machine data from the machine control (MS) of the machine (M) to the device (1) is permitted.

2. Machine according to claim 1, **characterized in that** the device (1) comprises at least one memory (30), in which the machine data sent from the machine (M) to the device (1) is at least partially and at least temporarily storable.

3. Machine according to one of the previous claims, **characterized in that** the communication device (20) comprises at least one interface (21a, 21b, 21c), via which a wired or a wireless data communication between at least one peripheral device (P1, P2, P3) and the device (1) can be done.

4. Machine according to one of the previous claims, **characterized in that** the device (1) comprises at least one further interface (40), via which machine data sent from the machine (M) to the device (1) and optionally stored in the memory (30) can be supplied to a further peripheral device (P4).

5. Machine according to claim 4, **characterized in that** the further interface (40) is connected via a further data connection (42) with a machine-external controller (SPS), which in turn is connected with the further peripheral device (P4).

6. Machine according to one of the previous claims, **characterized in that** said at least one interface (21a, 21b, 21c, 40) is designed in such a way that to the device (1) only the command signal, in particular a request signal generated by at least one peripheral device (P1, P2, P3, P4), can be transmitted.

7. Machine according to claim 6, **characterized in that** the further Interface (40) is connected with at least one microcomputer (10a).

8. Machine according to one of the previous claims, **characterized in that** the device (1) comprises at least two proprietary microcomputers (10, 10a).

9. Machine according to one of the previous claims, **characterized in that** the further data connection (12) between the device (1) and the machine (M) is designed In such a way that from the device (1) to the machine (M) only the query signal of the microcomputer (10; 10a) can be transmitted.

10. Machine according to one of the previous claims, **characterized In that** at least one of the data connections (12, 22, 42) is designed in such a way that machine data can be transmitted from the machine controller (MS) to at least one microcomputer (10, 10a) and/or said at least one memory (30).

11. Method for providing machine data of a machine (M), **characterized In that** a machine (M) according to one of the claims 1 to 10 is used.

## Revendications

1. Machine (M) contenant un dispositif (1) pour fournir des données de machine, dans laquelle la machine (M) présente une commande de machine (MS), dans laquelle les données de machine sont stockées, dans laquelle la commande de machine (MS) est reliée au dispositif (1) par l'intermédiaire d'une liaison de données (12), dans laquelle le dispositif (1) transfère les données de machine fournies par la machine (M) à au moins un appareil périphérique externe à la machine, une interface de données de machine (11), qui est reliée à la machine (M) par l'intermédiaire de la liaison de données (12), et possède au moins un micro-ordinateur (10 ; 10a), qui est relié à l'interface de données de machine (11), dans laquelle le dispositif (1) possède au moins un système de communication (20), lequel est relié à l'au moins un micro-ordinateur (10 ; 10a) par l'intermédiaire d'une autre liaison de données (22) et présente au moins une interface (21a, 21b, 21c), par l'intermédiaire de laquelle le dispositif (1) peut être relié à au moins un appareil périphérique (P1, P2, P3), **caractérisée en ce que** ledit au moins un micro-ordinateur (10 ; 10a) contient un jeu prédéfini d'instructions, et qu'un signal d'instruction d'au moins un appareil périphérique (P1, P2, P3), qui est amené au dispositif (1), est amené au micro-ordinateur (10 ; 10a) par l'intermédiaire du système de communication (20), que le micro-ordinateur (10 ; 10a) contenant l'ensemble prédéfini d'instructions est réalisé de telle manière qu'il envoie à la commande de machine (MS) de la machine (M) seulement alors un signal d'interrogation par l'intermédiaire de la liaison de données (12) lorsque le signal d'instruction amené au dispositif (1) par l'appareil périphérique (P1, P2, P3) correspond à un signal issu du jeu prédéfini d'instructions, et que le micro-ordinateur (10 ; 10a) envoie à l'appareil périphérique (P1, P2, P3) d'interrogation par l'intermédiaire du système de communication (20) des données de machine interrogées par la commande de machine (MS) de la machine (M), que la liaison de données (12) et/ou l'autre liaison de données (22) sont réalisées de telle manière qu'elles permettent dans une première direction de circulation seulement une transmission restreinte de données et/ou d'instructions du dispositif (1) à la commande de machine (MS) et/ou du système de communication (20) au micro-ordinateur (10 ; 10a), et que la liaison de données (12) et/ou l'autre liaison de données (22) sont réalisées de telle manière qu'elles permettent dans une deuxième direction de circulation, opposée à la première direction de circulation, la transmission de données de machine de la commande de machine (MS) de la machine (M) au dispositif (1).

2. Machine selon la revendication 1, **caractérisée en ce que** le dispositif (1) présente au moins une mémoire (30), dans laquelle les données de machine envoyées par la machine (M) au dispositif (1) peuvent être sauvegardées au moins en partie au moins temporairement.

3. Machine selon l'une quelconque des revendications précédentes, **caractérisée en ce que** le système de communication (20) possède au moins une interface (21a, 21b, 21c), par l'intermédiaire de laquelle une communication de données filaire ou sans fil peut être réalisée entre au moins un appareil périphérique (P1, P2, P3) et le dispositif (1).

4. Machine selon l'une quelconque des revendications précédentes, **caractérisée en ce que** le dispositif (1) possède au moins une autre interface (40), par l'intermédiaire de laquelle des données de machine envoyées au dispositif (1) par la machine (M) et stockées provisoirement éventuellement dans la mémoire (30) peuvent être amenées à un autre appareil périphérique (P4).

5. Machine selon la revendication 4, **caractérisée en ce que** l'autre interface (40) est reliée par l'intermédiaire d'une autre liaison de données (42) à une commande externe à la machine (SPS), laquelle est reliée quant à elle à l'autre appareil périphérique (P4).

6. Machine selon l'une quelconque des revendications précédentes, **caractérisée en ce que** l'interface ou au moins une interface (21a, 21b, 21c, 40) est réalisée de telle manière que seul le signal d'instruction, en particulier un signal de demande généré par au moins un appareil périphérique (P1, P2, P3, P4) peut être transmis au dispositif (1).

7. Machine selon la revendication 6, **caractérisée en ce que** l'autre interface (40) est reliée à au moins un micro-ordinateur (10a).

8. Machine selon l'une quelconque des revendications précédentes, **caractérisée en ce que** le dispositif (1) présente au moins deux micro-ordinateurs (10, 10a) propriétaires.

9. Machine selon l'une quelconque des revendications précédentes, **caractérisée en ce que** l'autre liaison de données (12) entre le dispositif (1) et la machine (M) est réalisée de telle manière que le seul le signal d'interrogation généré par le micro-ordinateur (10 ; 10a) peut être transmis du dispositif (1) à la machine (M).

10. Machine selon l'une quelconque des revendications précédentes, **caractérisée en ce qu'**au moins une des liaisons de données (12, 22, 42) est réalisée de telle manière que des données de machine peuvent être transmises de la commande de machine (MS) à au moins un micro-ordinateur (10, 10a) et/ou à au moins une mémoire (30).

11. Procédé pour fournir des données de machine d'une machine (M), **caractérisé en ce qu'**une machine (M) selon l'une quelconque des revendications 1 à 10 est utilisée.
